Europäisches Patentamt

**European Patent Office**

**Office européen des brevets**

(19)

(11) Veröffentlichungsnummer: **0 198 186**
**B1**

(12) **EUROPÄISCHE PATENTSCHRIFT**

(45) Veröffentlichungstag der Patentschrift:
28.06.89

(21) Anmeldenummer: 86102608.6

(22) Anmeldetag: 28.02.86

(51) Int. Cl.⁴: **B01J 37/00**, B01D 53/36

(54) Verfahren zur Herstellung eines Abgas-Reaktorkörpers.

(30) Priorität: 21.03.85 DE 3510170

(43) Veröffentlichungstag der Anmeldung:
22.10.86 Patentblatt 86/43

(45) Bekanntmachung des Hinweises auf die Patenterteilung:
28.06.89 Patentblatt 89/26

(84) Benannte Vertragsstaaten:
AT BE CH DE FR GB IT LI NL SE

(56) Entgegenhaltungen:
DE-A- 2 242 907
FR-A- 2 168 028
FR-A- 2 177 998
US-A- 3 794 588

CHEMICAL ABSTRACTS, Band 89, 1978, Seite 289,
Nr. 10871m, Columbus, Ohio, US; & JP - B
- 77 77 114 (BRIDGESTONE TIRE CO., LTD.) 29-06-1977
CHEMICAL ABSTRACTS, Band 100, Nr. 22, Mai 1984,
Seite 268, Nr. 179214f, Columbus, Ohio, US; & JP - A
- 59 03 059 (CATALER KOGYO K.K. TOYOTA MOTOR
CO., LTD.) 09-01-1984

(73) Patentinhaber: Drache Keramikfilter Productions-GmbH,
Werner-von-Siemens-Strasse 9, D-6252 Diez(DE)

(72) Erfinder: Drache, Frank, Dipl.-Betriebswirt,
Bahnhofstrasse 2, D-6251 Hahnstätten(DE)

(74) Vertreter: Blumbach Weser Bergen Kramer Zwirner
Hoffmann Patentanwälte, Sonnenbergerstrasse 43,
D-6200 Wiesbaden 1(DE)

## Beschreibung

Die Erfindung betrifft ein Verfahren zur Herstellung eines Abgas-Reaktorkörpers unter Verwendung eines mit einem Katalysatormaterial belegten Keramikschaumkörpers, bei dem ein Formkörper aus offenporigem organischem Schaumstoff mit einer Aufschlämmung eines keramischen Materials imprägniert, der Formkörper nach Entfernen überschüssiger Aufschlämmung vorgetrocknet und dann gebrannt wird, und bei dem eine dünnflüssige Aufschlämmung, Dispersion oder Lösung von Katalysatormaterial in den gebrannten Körper eingebracht wird. Ein solches Verfahren ist aus der DE-A 2 242 907 bekannt.

Die Herstellung keramischen Schaumstoffs ist bekannt (US-A 3 090 094). Dazu wird ein offenporiger Schaumstoff, beispielsweise Polyurethan, in eine Aufschlämmung (Schlicker) eines feinteiligen keramischen Materials, das gegebenenfalls Zusätze zur besseren Benetzung und zur Erzielung bestimmter mechanischer Eigenschaften besitzt, eingetaucht. Anschließend wird der Schaumstoff, beispielsweise durch Quetschen zwischen Walzen, von überschüssigem keramischem Material befreit, so daß die feinen Stäbchen des offenporigen Schaumstoffs nur mit einer dünnen Hülle umgeben sind. Nach einer Trocknung wird dann das Material gebrannt. Dabei verbrennt das Schaumstoffmaterial, das nur als Stützkörper gedient hat, und es bleibt ein keramischer Schaum zurück, der die Form des organischen Schaumstoffs hat.

Keramischer Schaumstoff der vorstehend beschriebenen Art wird beispielsweise zum Filtern flüssiger Metalle, beispielsweise Aluminium, benutzt. Es ist aber auch bereits bekannt (DE-A 2 301 619), ein Reaktorelement aus solchem keramischem Schaumstoff herzustellen, das beispielsweise zur Nachverbrennung von Kraftfahrzeug-Auspuffgasen verwendet wird. Bekannt ist es aus der vorgenannten DE-A auch, daß das keramische Material einen Katalysator enthält oder Träger eines Katalysatormaterials ist.

Die Wirksamkeit eines Abgasreaktors hängt außer von einer möglichst günstigen Strukturierung des Keramikschaums, der Größe der Poren und der geometrischen Form und Durchströmung des Reaktors von der guten Verteilung und Haftung des Katalysatormaterials auf der Keramikoberfläche ab. Der Erfindung liegt demgemäß die Aufgabe zugrunde, eine möglichst gute und wirksame Verteilung des Katalysatormaterials auf den zerklüfteten inneren Oberflächen des Keramikschaums bei guter Haftung zu ermöglichen.

Zur Lösung der Aufgabe geht die Erfindung aus von einem Verfahren der eingangs genannten Art und ist dadurch gekennzeichnet, daß das Katalysatormaterial durch Schleudern des Formkörpers fein verteilt wird.

Durch das Schleudern des mit der keramischen Aufschlämmung imprägnierten Schaumstoff-Formkörpers kann eine feine und gleichmäßige Verteilung der dünnflüssigen Aufschlämmung, Dispersion oder Lösung von Katalysatormaterial auf der gesamten inneren Oberfläche des imprägnierten Schaumstoff-Formkörpers erreicht werden.

Wenn in Weiterbildung der Erfindung die dünnflüssige Aufschlämmung, Dispersion oder Lösung von Katalysatormaterial vor dem Brennen des Formkörpers eingebracht und verteilt wird, läßt sich eine sehr gute Haftung unter geringfügigem Eindringen des eingebrachten dünnflüssigen Materials erreichen. Nach dem Brennen ist das Katalysatormaterial dann fester Oberflächenbestandteil des Keramikmaterials. Es kann die dünnflüssige Aufschlämmung, Dispersion oder Lösung von Katalysatormaterial auch nach dem Brennen des Formkörpers in den gebrannten Körper eingebracht und verteilt werden. Anschließend erfolgt zur Fixierung des Materials auf der Oberfläche des gebrannten Formkörpers eine zusätzliche Wärmebehandlung unterhalb der Brenntemperatur, beispielsweise bei etwa 700°C.

Zusätzliche Weiterbildungen der Erfindung sind vorgesehen. Eine gute Verteilung des dünnflüssigen Materials läßt sich erreichen, wenn der Formkörper beim Schleudern, zweckmäßig in einer Zentrifuge, um eine durch den Körper selbst verlaufende Achse gedreht wird. Im Falle eines zylindrischen Formkörpers, wie er vorzugsweise für Abgasreaktoren von Kraftfahrzeugen benutzt wird, kann die dünnflüssige Aufschlämmung, Dispersion oder Lösung etwa in den Bereich der Längsachse des Formkörpers eingebracht und der Formkörper dann um seine Längsachse gedreht werden. Es besteht auch die Möglichkeit, den Formkörper beim Schleudern in einem Behälter anzuordnen, wobei der Behälter gleichzeitig das spätere Gehäuse des Reaktors sein kann. In gleicher Weise kann der Formkörper auch beim Brennen in seinem späteren Gehäuse angeordnet sein.

Katalysatormaterial, das sich bei dem Verfahren nach der vorliegenden Erfindung verwenden läßt, ist bekannt und im Handel verfügbar. Es können reduzierende oder oxidierende Katalysatorbeschichtungen verwendet werden. So kann das Katalysatormaterial eines oder mehrere der Metalle Platin, Chrom, Rhodium, Nickel, Mangan, Vanadium, Cobalt, Silber enthalten. In Frage kommen aber auch Eisenoxid, Schwefel, Lithium- und Kohlenstoffverbindungen. Dabei kann das Katalysatormaterial als feines Metallpulver oder auch als Dispersion vorliegen.

Der Schaumstoff-Formkörper hat zweckmäßig eine Porenzahl zwischen 4 und 18, d.h. der Schaumstoff hat vor dem Öffnen der Poren etwa 4 bis 18 Poren je Zentimeter gehabt. Dabei verwendet man einen Schaumstoff mit groben Poren (Porenzahl 8) für Abgasreaktoren von Kraftfahrzeugen und feinere Poren (Porenzahl 12 oder mehr) für Abgasreaktoren von Großfeuerungsanlagen. Bei der Abgasreinigung von Kraftfahrzeugen geht es insbesondere um die Beseitigung von Kohlenmonoxid durch Verbrennung zu Kohlendioxid sowie von Stickoxiden ($NO_x$). Bei Großfeuerungsanlagen, bei denen Keramikformkörper mit Katalysatorbelegung nach der Erfindung beispielsweise in Form von größeren Platten verwendet werden, soll Schwefeldioxid sowie ebenfalls Stickoxide, Ammoniumnitrat und Fluorverbindungen beseitigt werden.

Als Schaumstoff können alle bekannten Schaumstoffarten verwendet werden. Zweckmäßig besteht jedoch der Schaumstoffkörper aus Polyurethan. In allen Fällen muß der Schaumstoff offenporig sein, d.h. die ursprünglich beim Aufschäumen des Materials erzeugten Poren müssen beseitigt werden derart, daß nur noch an den ursprünglichen Berührungslinien der Poren stäbchenartige Gebilde stehenbleiben, die zu einem räumlichen Stabwerk verbunden sind. Ein solches Öffnen der Poren, das auch Retikulieren genannt wird, kann in bekannter Weise chemisch oder auch physikalisch durch Wärmeeinwirkung erfolgen. Hierzu wird der Schaumstoff beispielsweise in ein Reaktorgefäß eingebracht, das mit einem explosiven Gas (Knallgas) gefüllt wird. Nach der Zündung schmelzen die dünnen Häutchen auf und konzentrieren sich im Bereich der ursprünglichen Berührungslinien.

Die dünnflüssige Aufschlämmung, Dispersion oder Lösung von Katalysatormaterial wird zweckmäßig in einer Menge von 0,5 bis 50, vorzugsweise 5 bis 20 ml/l Schaumstoffmaterial eingebracht. Dabei kann das Einbringen auch mit zwei oder mehreren Chargen nacheinander erfolgen. Die dünnflüssige Aufschlämmung, Dispersion oder Lösung enthält zweckmäßig zwischen 0,5 und 5 g, vorzugsweise etwa 1 bis 2 g Katalysatormaterial pro Liter Schaumstoffmaterial. Für Kraftfahrzeug-Reaktoren hat sich eine dünnflüssige Aufschlämmung mit etwa 1,5 g Platin pro Liter Schaumstoffmaterial bewährt.

## Patentansprüche

1. Verfahren zur Herstellung eines Abgas-Reaktorkörpers unter Verwendung eines mit einem Katalysatormaterial belegten Keramikschaumkörpers, bei dem ein Formkörper aus offenporigem organischem Schaumstoff mit einer Aufschlämmung eines keramischen Materials imprägniert, der Formkörper nach Entfernen überschüssiger Aufschlämmung vorgetrocknet und dann gebrannt wird, und bei dem eine dünnflüssige Aufschlämmung, Dispersion oder Lösung von Katalysatormaterial in den gebrannten Körper eingebracht wird, dadurch gekennzeichnet, daß das Katalysatormaterial durch Schleudern des Formkörpers fein verteilt wird.

2. Verfahren nach Anspruch 1, dadurch gekennzeichnet, daß die dünnflüssige Aufschlämmung, Dispersion oder Lösung von Katalysatormaterial vor, während oder nach dem Vortrocknen und vor dem Brennen des Formkörpers eingebracht und verteilt wird.

3. Verfahren nach Anspruch 1, dadurch gekennzeichnet, daß die dünnflüssige Aufschlämmung, Dispersion oder Lösung von Katalysatormaterial nach dem Brennen des Formkörpers in den gebrannten Körper eingebracht und verteilt wird und daß anschließend eine Wärmebehandlung stattfindet.

4. Verfahren nach einem der Ansprüche 1 bis 3, dadurch gekennzeichnet, daß der Formkörper beim Schleudern um eine durch den Körper verlaufende Achse gedreht wird.

5. Verfahren nach Anspruch 3, dadurch gekennzeichnet, daß bei einem zylindrischen Formkörper die dünnflüssige Schlämmung, Dispersion oder Lösung etwa in den Bereich der Längsachse des Formkörpers eingebracht und der Formkörper um seine Längsachse gedreht wird.

6. Verfahren nach einem der Ansprüche 1 bis 5, dadurch gekennzeichnet, daß der Formkörper beim Brennen in seinem späteren Gehäuse angeordnet ist.

7. Verfahren nach einem der Ansprüche 1 bis 6, dadurch gekennzeichnet, daß das Katalysatormaterial eines oder mehrere der Metalle Platin, Chrom, Rhodium, Nickel, Mangan, Silber, Cobalt, Vanadium enthält.

8. Verfahren nach einem der Ansprüche 1 bis 6, dadurch gekennzeichnet, daß der Schaumstoff-Formkörper eine Porenzahl zwischen 4 und 18 Poren pro cm besitzt.

9. Verfahren nach einem der Ansprüche 1 bis 8, dadurch gekennzeichnet, daß die dünnflüssige Aufschlämmung, Dispersion oder Lösung von Katalysatormaterial in einer Menge von 0,5 bis 50 ml, vorzugsweise 5 bis 20 ml, pro Liter Schaumstoffmaterial eingebracht wird.

10. Verfahren nach einem der Ansprüche 1 bis 9, dadurch gekennzeichnet, daß die dünnflüssige Aufschlämmung, Dispersion oder Lösung zwischen 0,5 und 5 g, vorzugsweise etwa 1 bis 2 g Katalysatormaterial pro Liter Schaumstoffmaterial enthält.

11. Verfahren nach Anspruch 10, dadurch gekennzeichnet, daß die dünnflüssige Aufschlämmung, Dispersion oder Lösung etwa 1,5 g Platin pro Liter Schaumstoffmaterial enthält.

## Claims

1. A method of manufacturing an exhaust-gas reactor member using a ceramic foam member coated with a catalyst material and in which a moulded member made of open-pore organic cellular material is impregnated with a slurry of ceramic material, the excess slurry is removed and the moulded member is pre-dried and then fired, and a low-viscosity slurry, dispersion or solution of catalyst material is introduced into the fired member, characterised in that the catalyst material is finely divided by spinning the moulded member.

2. A method according to claim 1, characterised in that the low-viscosity slurry, dispersion or solution of catalyst material is introduced and divided before, during or after pre-drying and before firing the moulded member.

3. A method according to claim 1, characterised in that the low-viscosity slurry, dispersion or solution of catalyst material is introduced and distributed in the moulded member after firing thereof, followed by heat treatment.

4. A method according to any of claims 1 to 3, characterised in that during spinning, the moulded member is rotated around an axis extending through it.

5. A method according to claim 3, characterised in that in the case of a cylindrical moulded member the low-viscosity slurry, dispersion or solution is introduced near the longitudinal axis of the moulded member, and the moulded member is rotated around its longitudinal axis.

6. A method according to any of claims 1 to 5, characterised in that during firing, the moulded member is disposed in its future housing.

7. A method according to any of claims 1 to 6, characterised in that the catalyst material contains one or more of the following metals: platinum, chromium, rhodium, nickel, manganese, silver, cobalt and vanadium.

8. A method according to any of claims 1 to 6, characterised in that the cellular-material moulded member has a pore number between 4 and 18 pores.

9. A method according to any of claims 1 to 8, characterised in that the low-viscosity slurry, dispersion or solution of catalyst material is introduced in a quantity of 0.5 to 50 ml, preferably 5 to 20 ml per litre of cellular material.

10. A method according to any of claims 1 to 9, characterised in that the low-viscosity slurry, dispersion or solution contains between 0.5 and 5 g, preferably about 1 to 2 g, of catalyst material per litre of cellular material.

11. A method according to claim 10, characterised in that the low-viscosity slurry, dispersion or solution contains about 1.5 g of platinum per litre of cellular material.

**Revendications**

1. Procédé de préparation d'un corps de réacteur pour gaz d'échappement, par utilisation d'un corps en mousse céramique garni d'un matériau catalyseur, dans lequel une pièce moulée, en un matériau expansé organique à pores ouverts, est imprégnée d'une suspension d'un matériau céramique, la pièce moulée, après élimination de la suspension en excès, subit un séchage préalable puis une cuisson, et dans lequel une suspension, dispersion ou solution, à faible viscosité, du matériau catalyseur, est introduite dans la pièce cuite, caractérisé en ce que le matériau catalyseur est finement réparti par centrifugation de la pièce moulée.

2. Procédé selon la revendication 1, caractérisé en ce que la suspension, dispersion ou solution, à faible viscosité, est introduite et répartie avant, pendant ou après le séchage préalable et avant la cuisson de la pièce moulée.

3. Procédé selon la revendication 1, caractérisé en ce que la suspension, dispersion ou solution, à faible viscosité, du matériau catalyseur est introduite et répartie dans la pièce cuite après cuisson de la pièce moulée, et que l'on procède ensuite à un traitement thermique.

4. Procédé selon l'une des revendications 1 à 3, caractérisé en ce que la pièce moulée, lors de la centrifugation, est mise en rotation autour d'un axe traversant la pièce.

5. Procédé selon la revendication 3, caractérisé en ce que, pour une pièce moulée cylindrique, la suspension, dispersion ou solution à faible viscosité est introduite approximativement dans la zone de l'axe longitudinal de la pièce moulée, cette dernière étant mise en rotation autour de son axe longitudinal.

6. Procédé selon l'une des revendications 1 à 5, caractérisé en ce que la pièce moulée, lors de la cuisson, est disposée dans ce qui sera ultérieurement son enveloppe.

7. Procédé selon l'une des revendications 1 à 6, caractérisé en ce que le matériau catalyseur contient un ou plusieurs des métaux platine, chrome, rhodium, nickel, manganèse, argent, cobalt, vanadium.

8. Procédé selon l'une des revendications 1 à 6, caractérisé en ce que la pièce moulée en un matériau expansé a un indice de porosité compris entre 4 et 18 pores par cm.

9. Procédé selon l'une des revendications 1 à 8, caractérisé en ce que la suspension, dispersion ou solution, à faible viscosité, du matériau catalyseur est introduite en une quantité de 0,5 à 50 ml, de préférence de 5 à 20 ml par litre du matériau expansé.

10. Procédé selon l'une des revendications 1 à 9, caractérisé en ce que la suspension, dispersion ou solution à faible viscosité contient de 0,5 à 5 g, de préférence environ 1 à 2 g de matériau catalyseur par litre de matériau expansé.

11. Procédé selon la revendication 10, caractérisé en ce que la suspension, dispersion ou solution à faible viscosité contient environ 1,5 g de platine par litre du matériau expansé.